# EUROPÄISCHE PATENTSCHRIFT

(11) **EP 1 440 260 B1**
(45) Veröffentlichungstag und Bekanntmachung des Hinweises auf die Patenterteilung: **11.05.2005**
(21) Anmeldenummer: 02785256.5
(22) Anmeldetag: 19.10.2002
(51) Int. Cl.: F16H 63/30

(54) **SCHALTEINRICHTUNG MIT LAGERUNG IN EINEM SCHALTGETRIEBE**
SHIFT DEVICE WITH BEARING IN A MANUAL TRANSMISSION
MECANISME DE MANOEUVRE ET LOGEMENT DE PALIER DANS UNE BOITE DE VITESSES

(30) Priorität: 02.11.2001 DE 10153912
(43) Veröffentlichungstag der Anmeldung: 28.07.2004
(73) Patentinhaber: INA-Schaeffler KG, 91074 Herzogenaurach (DE)
(72) Erfinder: KRÄMER, Klaus, 91460 Baudenbach (DE); LANDA, Boris, 91088 Bubenreuth (DE)
(86) Internationale Anmeldenummer: PCT/EP2002/011730
(87) Internationale Veröffentlichungsnummer: WO 2003/038318

(56) Entgegenhaltungen:
- DE-A- 4 020 160
- DE-A- 4 116 823

## Beschreibung

### Gebiet der Erfindung

Die Erfindung betrifft eine Schalteinrichtung mit Lagerung in einem Schaltgetriebe zum Übertragen von Drehmomenten zwischen zumindest einer ersten Führungsfläche an einem schwenkbaren sowie längs der Lagerung zum Schaltgetriebe relativ festen Schwenkelement und zwischen einer längs zur Lagerung relativ bewegbaren sowie mit dem Schwenkelement wenigstens schwenkbar in der Lagerung gelagerten zweiten Führungsfläche, wobei die Führungsflächen mittels wenigstens eines in eine Richtung die erste Führungsfläche und in eine andere Richtung die zweite Führungsfläche abstützenden, rollenförmig ausgebildeten sowie längs abrollbaren Wälzkörpers voneinander beabstandet sind.

### Hintergrund der Erfindung

Eine Schalteinrichtung ist in der nächstkommenden DE 40 20 160 A1 beschrieben. Die Lagerung ist an einer zentralen Wähl- und Schaltwelle und einer Wählschwinge angeordnet. Das gelagerte Element, in diesem Falle eine geschwenkte Schaltwelle, nimmt über die Lagerung in Schwenkrichtung ein weiteres Element des Schaltgetriebes, in diesem Falle eine Wählschwinge, mit. Die Wählschwinge ist dazu in dem Gehäuse des Schaltgetriebes schwenkbar gelagert und wird mit ihrem freien Ende gegen die Kraft eines gehäusefesten Federelementes geschwenkt. Dadurch entsteht an der Schaltwelle in Folge der auf den Hebel der Wählschwinge wirkenden Federkraft ein gewolltes Gegenmoment von definierter Größe in Abhängigkeit von einem vorgegebenen Schwenkwinkel der Schaltwelle oder in Abhängigkeit vom Weg im Bogenmaß an der Schwinge (Drehmomenten-Weg-Verlauf). Dieses Gegenmoment erzeugt z. B. am Handschalthebel gewollt spürbare Anstiege in der Schaltkraft über einen vorgegebenen Schaltweg (Kraft-Weg-Verlauf).

Die Schaltwelle ist relativ zum Schaltgetriebe entlang ihrer Längsachse verschiebbar und schwenkbar angeordnet und ist mittels der Lagerung in einer Nabe der Wählschwinge entlang ihrer Längsachse verschiebbar aber drehfest gelagert. Die Wählschwinge stützt sich drehbar aber längs zur Schaltwelle fest an dem Schaltgetriebe ab. Zwischen der Nabe und der Schaltwelle sind mit möglichst wenig radialem Spiel Wälzkörper für eine reibungsarme Längsbewegung der Schaltwelle in der Nabe angeordnet. In Umfangsrichtung übertragen die Wälzkörper Drehmomente durch die Lagerung hindurch zur Wählschwinge oder in umgekehrter Richtung. Die Wälzkörper sind Kugeln oder Rollen und stützen sich beim Übertragen der Momente an einer im Querschnitt rund ausgebildeten Schaltwelle in längs verlaufenden Laufbahnen an der Welle und entsprechenden Gegenlaufbahnen dazu an der Nabe ab.

Die Herstellung einer in DE 40 20 160 A1 gezeigten Lagerung ist aufgrund der Nuten in der Nabe und in der Schaltwelle relativ aufwändig. In diesen Lagerungen, insbesondere in denen mit Kugeln, liegt der Wert des maximal übertragbaren Drehmomentes oftmals aus Gründen eines eingeschränkt verfügbaren Bauraumes für Wälzkörper in ausreichender Größe und Anzahl oftmals auf zu niedrigem Niveau. Das Niveau ist bestimmt durch die zulässige maximale Hertz sche Pressung an dem Kontakt der in der Lagerung verbauten Wälzkörper im Zusammenwirken mit ihren Laufbahnen.

Aus dem vorgenannten Grund sieht DE 40 20 160 A1 alternativ vor, dass die Schaltwelle zumindest in dem Bereich des Schiebesitzes in der Lagerung eine von einem kreisrunden Querschnitt abweichende Form aufweist. In diesem Falle ist der Abschnitt der Schaltwelle als ein gerades Prisma ausgebildet. Die der Schaltwelle zugewandten Seitenwände der Nabe mit den Führungsflächen für die Wälzkörper verlaufen parallel zu den Seitenflächen des Prismas. Zwischen jeder Seitenfläche an der Schaltwelle und der gegenüberliegenden Führungsfläche an der Nabe sind Rollen bzw. Nadeln als Wälzkörper angeordnet. Die Wälzkörper sind mit einem Käfig zueinander geführt.

Die übertragbaren Drehmomente in einer derartigen Lagerung sind relativ hoch, jedoch ist die Herstellung von Profil für die Nabe und die Schaltwelle mit einem von der kreisrunden Form abweichenden Form an dem Schiebesitz vergleichsweise aufwändig. Die Laufbahnen für die Wälzkörper sind in der Regel gehärtet. Der für die Schaltwelle gewählte Stahl muss also den Anforderungen an die Laufbahn angepasst härtbar sein und das Handling der relativ großen Schaltwellen während des Härteprozesses erhöht die anfallenden Kosten für die Herstellung einer derartigen Schaltwelle.

Die Drehmomenten-Weg-Verläufe an der Schaltwelle und damit komfortable Schaltkräfte bzw. Kraft-Weg-Verläufe am Handschalthebel sind in Anordnungen nach dem Stand der Technik schwer den Anforderungen an den Schaltkomfort anpassbar. Das liegt auch daran, dass die Lagerungen der Schaltwelle aufgrund ihrer anfangs erwähnten Ausführung nur bedingt belastbar sind.

### Zusammenfassung der Erfindung

Die Aufgabe der Erfindung ist es daher, eine Schatteinrichtung mit Lagerung eines entlang seiner Längsachse verschiebbaren und schwenkbaren Elementes in einem Wechselgetriebe zum Übertragen von hohen Drehmomenten zu schaffen, wobei die Schalteinrichtung kostengünstig herzustellen sein soll.

Diese Aufgabe ist durch die Maßnahmen des Anspruchs 1 gelöst. Die Kosten für die Herstellung von derartig ausgebildeten Schaltwellen sind in der Regel niedriger. Die Schaltwelle muss an dem Schiebesitz nicht mit den vorgenannten Laufbahnen versehen sein. Der Fertigungsprozess für die Schaltwelle gestaltet sich kostengünstiger. Der für die Schaltwelle eingesetzte Werkstoff ist in Abhängigkeit von allen anderen Anforderungen an die Schaltwelle, wie z. B. Schweißbarkeit oder Kosten des Werkstoffes, aber nicht in Abhängigkeit von der Qualität der Laufbahnen für die Wälzkörper auswählbar. Der Adapter ist als Einzelteil vorzugsweise in spanloser Fertigung durch beispielsweise Sintern oder bevorzugt durch Kaltumformen von Stahl hergestellt.

Ein Presssitz sichert einen festen Sitz des Adapters auf der Schaltwelle. Alternativ ist der Adapter unlösbar durch Schweißen oder lösbar mittels einer Stiftverbindung auf der Schaltwelle befestigt bzw. ist der Adapter ein hülsenförmiges Bauteils aus Blech mit mindestens zwei planen zweiten Führungsflächen. Der Adapter ist zumindest längs mittels wenigstens eines aus dem Blech radial nach innen gebildeten sowie in eine Ausnehmung an der Schaltwelle eingreifenden Formelementes auf der Schaltwelle gesichert. Das Formelement ist zum Beispiel eine Prägung oder eine teilweise aus dem Blech gestanzte und abgebogene Lasche.

Der Adapter ist unabhängig von der Schaltwelle hergestellt und als auch Blech geformtes Ziehteil besonders in der Massenproduktion kostengünstig herzustellen. Das Handling eines vergleichsweise zur Schaltwelle kleinen Adapters ist in der Regel in dem Fertigungsprozess einfacher als das Handling einer kompletten Schaltwelle. Die Kosten für das kostenintensive Härten der Schaltwelle am Lagersitz sind durch die wesentlich kostengünstigere Wärmebehandlung des vergleichsweise zur Schaltwelle geringvolumig ausgebildeten Adapters ersetzt. Der Adapter ist, ebenso wie die weiteren Teile einer Schaltvorrichtung, wie ein Schwenkhebel, ein Sperrsegment und die Tragplatte, bevorzugt aus Tiefziehstahl durch Kaltumformen hergestellt.

Eine Ausgestaltung der Erfindung sieht vor, dass die Außenkontur des Adapters ein gerades Prisma beschreibt, wobei wenigstens an einer der Seitenflächen des Prismas die zweite Führungsfläche ausgebildet ist. Gerade Prismen bilden beispielsweise abgelängte Dreikant-, oder Vierkant-, oder Sechskantprofile. Vorzugsweise ist ein Adapter eingesetzt, dessen Außenkontur eine quadratische Säule, also z. B. ein quadratisches Vierkantprofil beschreibt. An zumindest einem Abschnitt, vorzugsweise an jeder der nach außen gewandten Seitenflächen des Adapters, sind die Führungsflächen für das Führen der Wälzkörper ausgebildet. Sowohl die nach innen gewandten und den zweiten Führungsflächen gegenüberliegenden ersten zumeist planen Führungsflächen an dem Schwenkelement als auch die zweiten zumeist planen Führungsflächen an dem Adapter sind vorzugsweise durch das Umformen mit einer Oberfläche hergestellt, deren Qualität den Anforderungen an Laufbahnen für Lineartager in dieser Anwendung entspricht. Zumindest ist die Oberfläche durch das Ziehen verfestigt von ausreichender Oberflächenrauheit und im Bedarfsfall gehärtet. Spanabhebende Nacharbeit entfällt in der Regel.

Zwischen den ersten und zweiten Führungsflächen sind Wälzkörper, vorzugsweise Rollen oder Nadeln in einem Käfig pro Seitenfläche des Adapters oder in einem den Adapter in Umfangsrichtung umgreifenden und alle Wälzkörper aufnehmenden Käfig geführt. Die Wälzkörper sind in Abrollrichtung einreihig hintereinander oder mehrreihig vorzugsweise zweireihig nebeneinander angeordnet. Hohe Drehmomente in der Lagerung sind übertragbar, da mehr Wälzkörper eingesetzt werden können und der Linienkontakt der Rollkörper mit der Laufbahn sich günstig auf die Kontaktpressung auswirkt. Die Schaltwelle lässt sich dennoch aufgrund des geringen Widerstandes durch Rollreibung der in Schieberichtung der Schaltwelle abrollenden Wälzkörper komfortabel längs verschieben.

Die Lagerung ist radial spielfrei gestaltet, wenn der Adapter mit ausreichend dünnem Blech im Laufbahnbereich für die Wälzkörper federnd nachgebend ausgebildet ist. Die Wälzkörper sind dann in allen Toleranzlagen der Lagerung mit leichter Vorspannung zwischen das Schwenkelement und den Adapter eingebracht. Radiale Überdeckungen in der Lagerung sind durch die radial elastisch selbst einfedemden Führungsbahnen oder durch in unmittelbare Nähe der Führungsbahnen am Adapter angeordnete und sich an der Schaltwelle abstützende federnd nachgebende Bereiche ausgeglichen. Ein radialer Anschlag für die Laufbahnen gegen die Schaltwelle begrenzt das radiale Einfedern jedoch, wenn hohe Drehmomente übertragen werden sollen.

Innenseitig ist der Adapter dem Umfang der zumeist im Querschnitt kreisrunden Schaltwelle angepasst ausgeführt. Dabei sitzt der Adapter vorzugsweise mit einem Presssitz auf der Schaltwelle. Die Schaltwelle kann selbstverständlich auch alle anderen von einer kreisrunden Form abweichenden Querschnitte oder Profile aufweisen. Für das Übertragen von hohen Drehmomenten ist der Adapter mittels einer Stiftverbindung oder durch eine Schweißung auf der Schaltwelle in seiner Position an dem Schiebesitz gesichert. Vorzugsweise ist der Adapter jedoch als ein Vierkant-Hohlprofil ausgebildet und sitzt, die Schaltwelle umgreifend, auf der Schaltwelle. An einer Schaltwelle mit kreisrun-dem Querschnitt liegen die Innenflächen des Adapters an dem Außenmantel der Schaltwelle nur abschnittsweise an. Der Sitz des Adapters auf der Schaltwelle ist vorzugsweise an allen Innenflächen jeweils mit einer längs in dem Profil des Adapters eingeformten Nut versehen. Die Nut ist im Querschnitt gesehen kreisbogenförmig so ausgespart, dass die Schaltwelle sich mit einem Teil ihrer bogenförmig ausgewölbten Mantelfläche passgenau in die Nut einschmiegt. Damit ist einerseits ein zur Längsmittelachse der Schaltwelle genau zentrierter Sitz des Adapters, insbesondere bei einem Presssitz erzielt. Andererseits sichern derartig angeschmiegte Innenwände des Adapters die Übertragung von höheren Drehmomenten ab. Alternativ oder zusätzlich dazu ist die Schaltwelle am Sitz des Adapters mit einer Ausnehmung oder einer Bohrung versehen, in die Blechmaterial aus der Wandung des Adapters radial nach innen gedrückt und verformt wird. Das in die Bohrung eingreifende Blechmaterial sichert den Adapter auf der Welle in Längs- aber auch in Schwenkrichtung.

Mit einer weiteren Ausgestaltung der Erfindung ist vorgesehen, dass das Schwenkelement ein Schwenkhebel ist und dass dieser Schwenkhebel, an der Lagerung selbst, längs zur Schaltwelle und zu dem Schaltgetriebe fest und schwenkbar angeordnet ist. Dazu ist der Schwenkhebel an einem Ende mit einer Nabe oder zumindest einem nabenartigen Ansatz versehen. Die Nabe bzw. der Ansatz weisen ein Loch auf, welches in seinem freien Querschnitt dem Außenprofil des Adapters soweit angepasst ist, dass jeder der zweiten Führungsflächen an den Seitenflächen des Adapters parallel ausgerichtet eine erste plane Führungsfläche in dem Loch der Nabe gegenüberliegt. Zwischen diesen Flächen sind dann die rollenförmigen Wälzkörper wie schon oben beschrieben alternativ in einem oder mehreren Käfigen angeordnet. Außen ist an der Nabe oder an dem Ansatz zumindest ein Bund oder Ähnliches für die Aufnahme in der Lagerung oder an dem Schaltgetriebe vorgesehen. An dem Innenmantel des Bundes ist bevorzugt ein Loch mit den vier planen Innenflächen bzw. ersten Führungsflächen ausgeformt. Vorzugsweise ist der Bund aus einem aus Blech gestanzten Hebel in Form einer sich in die Längsrichtung der Schaltwelle erstreckenden Hülse durchgestellt gezogen. Die Hülse stützt sich schwenkbar nach außen zum Schaltgetriebe ab und ist in die Bewegungsrichtung der Schaltwelle fest zum Schaltgetriebe angeordnet. Eine Ausführung der Erfindung sieht einen Bund vor, dessen Außenkontur z. B. kreisrund ausgeführt ist. Eine weitere Ausführung sieht einen Bund an dem Schwenkelement vor, der den Querschnitt eines Vierkant-Profiles aufweist. Der Bund ist an seinen vier äußeren Kanten so abgerundet ausgeführt, dass ein zur Schwenkachse der Lagerung zentrierter sowie schwenkbarer Sitz des Bundes in einem gesondert in der Lagerung angeordneten Lagerring abgesichert ist. Der Lagerring selbst, von rundem Querschnitt innen und außen, sitzt schwenkbar gelagert zum Getriebe in dem Gehäuse des Getriebes oder in einer Tragplatte.

Auf ein zum Schaltgetriebe gehäusefestes federndes. Element wirkt der Schwenkhebel beispielsweise an einer Wählschwinge zum Erzeugen von Schaltkräften oder zur Schaffung einer Schlagsperre gegen unbeabsichtigtes Schalten eines Ganges. Eine andere Ausführung sieht vor, dass der Schwenkhebel ein Schaltfinger ist.

Weiterhin ist vorgesehen, dass der Schwenkhebel Bestandteil einer Vorrichtung für das Erzeugen von Schaltkräften an der Schaltwelle ist. Der Schwenkhebel wirkt für das Erzeugen der Schaltkräfte durch die Schaltwelle schwenkbar auf ein dabei elastisch einfederndes Federelement ein. Dabei ist zumindest beim Erzeugen der Schaltkräfte zwischen dem Schwenkhebel und dem Federelement ein Kipphebel angeordnet. Der geschwenkte Schwenkhebel ist zu einer Kippachse des Kipphebels beabstandet und greift zumeist mit dem Ende seines Hebelarmes an dem Kipphebel an. Gleichzeitig ist das Federelement entgegen dem dabei um die Kippachse schwenkenden Kipphebel gegen den Kipphebel vorgespannt. Der Schwenkhebel greift zu der Kippachse des Kipphebels beabstandet an dem Kipphebel, an z. B. einem zweiarmigen Kipphebel an. Das Federelement liegt auch zu der Kippachse des Kipphebels beabstandet an einem der Hebelarme des Kipphebels an.

Zum Erzeugen der Schaftkräfte muss der Schwenkhebel mit einer Kraft auf den Kipphebel wirken. Dazu ragt der Kipphebel in den Schwenkbereich des Schwenkhebels hinein. Die Schaltwelle wird geschwenkt und schwenkt den Schwenkhebel mit. Dabei trifft/wirkt der Schwenkhebel auf den Kipphebel und verkippt diesen aus einer Ausgangsstellung um seine Kippachse. Der Hebel kippt dann vorzugsweise im entgegengesetzten Drehsinn zum Drehsinn des schwenkenden Hebels. Da das Federelement an einem anderen Ende des Kipphebels anliegt, bewegt sich der Kipphebel gegen den Widerstand der Federkraft gegen das Federelement. Die Feder(n) in dem Federelement federt (federn) elastisch ein. Wenn die Schaltwelle zurückgeschwenkt wird oder wenn die Gegenkraft an der Schaltwelle entfällt, schwenkt damit der Schwenkhebel von dem Kipphebel weg in eine Ausgangsstellung zumeist gegen einen Anschlag am Getriebegehäuse oder einer Tragplatte zurück. Die Energie der Feder(n) zwingt dann auch den Kipphebel um seine Kippachse schwenkend und dabei der Kipphebel unter Umständen den Schwenkhebel mittels der Federkraft und damit die Schaltwelle schwenkend in eine Ausgangsstellung zurück.

In dem Hebelmechanismus über- oder untersetzt der zwischen das Federelement und den Schwenkhebel geschaltete Kipphebel die Federkraft des Federelementes und erzeugt eine Gegenkraft an dem Schwenkhebel und ein Drehmoment um die Schwenkachse an der geschwenkten Schaltwelle. Die Schaltkraft am Schalthebel nimmt zu und signalisiert mit ihrem von dem Normalwert abweichenden Anstieg der Bedienperson z. B. das sie im Begriff ist den Rückwärtsgang einzulegen. Die Abstände von der und die Positionen zur Kippachse, mit denen das Federelement und der Schwenkhebel an dem Kipphebel angreifen sowie die Federkraft des Federelementes bestimmen die Kraft an dem Schwenkhebel. Diese Kraft und die Länge des Schwenkhebels, beginnend von seiner Anlage am Kipphebel bis zur Schwenkachse der Schaltwelle, bestimmen schließlich das Drehmoment an der Schaltwelle. Das Drehmoment an der Schaltwelle wiederum wird direkt oder über weitere Hebelanordnungen in eine am Handschalthebel für die Bedienperson spürbare Schaltkraft umgesetzt. Die Schaltkraft liegt dann über den Schaltkräften, die bei der Wahl anderer Gänge auftreten. Mit der Gestalt des Kipphebels und der Wahl des Hebelverhältnisses an dem Kipphebel sind die zu erzeugenden Schaltkräfte bzw. Drehmomente als Gegenreaktion zu der Federkraft sehr fein abstimmbar. Auch bei kleinen Schwenkwinkeln der Schaltwelle wird eine gute Auflösung des Drehmomenten-Weg- bzw. Kraft-Weg-Verlaufes erzielt. Der Drehmomenten-Weg- bzw. Kraft-Weg-Verlauf ist auch von der Konstruktion des Federelementes abhängig. Je nach Typ, Anzahl und Anordnung und Ausführung der Federn in dem Federelement ist die Federkennlinie und damit auch die Gegenkraft am Kipphebel unterschiedlichen Anforderungen angepasst einstellbar.

Ausgestaltungen der Erfindung sehen die Verwendung von einer oder mehreren sowie in Reihe oder parallel geschalteten Schraubenfedern vor, die einen Bolzen gegen den Kipphebel vorspannen. Der Bolzen zentriert sich in einer Schraubenfeder und nimmt an seinem dem Kipphebel zugewandten Ende eine Kugel auf. Die Kugel rollt sich bei einem bewegten Kipphebel in etwa um ihre Mitte drehend an der Oberfläche des Kipphebels, z: B. an einer Rampe, ab. Der Bolzen ist dann so ausgebildet, wie die Bolzen aus den üblicherweise in Schaltgetrieben eingesetzten Arretierungen. Die Kugel ist in der Regel in einer kalottenförmig ausgebildeten Aufnahme an dem Bolzen, zumeist unter Zuhilfenahme mehrerer relativ kleiner Kugeln, gelagert. Der Bolzen ist gegen die Schraubenfeder beweglich mit der Schraubenfeder in einem Gehäuse der Arretierung gelagert. Das Gehäuse der Arretierung ist fest am Schaltgetriebe, beispielsweise an einer Tragplatte, angeordnet.

Die Tragplatte ist eine Platte, an der Schaltwellen, Schwenkhebel, Kipphebel und Federelemente zu einer Baueinheit vormontiert aufgenommen sind. Die Tragplatte ist im Anschluss an ihre Vormontage an einem Getriebe zu befestigen.

Die Erfindung ist weiter mit einem an einer Tragplatte schwenkbar aufgenommenen Schwenkhebel ausgestaltet. Die Tragplatte ist, ebenso wie es der Kipphebel und der Schwenkhebel sind, vorzugsweise aus Blech in möglichst spanloser Fertigung hergestellt. Verfahren wie Stanzen, Feinstanzen, Prägen, Durchstellen, Biegen und Ziehen sind bevorzugt zur Herstellung eingesetzt. Die Tragplatte nimmt vorzugsweise außer dem Schwenkhebel auch das Federelement und den Kipphebel auf sowie stützt die Schaltwelle.

Die Schaltwelle ist schwenkbar und längsverschiebbar in der Tragplatte geführt und gelagert. Die Schwenkachse der Schaltwelle durchdringt dabei bevorzugt, ebenso wie die Kippachse des Kipphebels die Tragplatte, wobei die Achsen vorzugsweise senkrecht zur Tragplatte ausgerichtet sind. Die Mittelachse(n) einer oder mehrere Schraubenfeder(n) in dem Federelement verlaufen vorzugsweise parallel ausgerichtet zur Oberfläche der Tragplatte bzw. wirken senkrecht zur Kippachse des Kipphebels. Die Tragplatte ist als Baueinheit vormontierbar in das Schaltgetriebe einsetzbar. Der Adapter ist vorzugsweise wiederum als ein Vierkant-Hohlprofil mit jeweils mindestens einer zweiten Führungsfläche an seinen nach außen gewandten Seitenflächen ausgebildet und sitzt, die Schaltwelle umgreifend, auf der Schaltwelle.

Schließlich ist mit einer Ausgestaltung der Erfindung vorgesehen, dass das Schwenkelement ein schwenkbares und längs festes in der Lagerung gelagertes Sperrsegment einer Schaltvorrichtung ist, wobei das schwenkbare Sperrsegment zeitweise mit wenigstens einer weiteren in der Schaltvorrichtung zu der Schaltwelle benachbart angeordneten Schaltwelle derart in Wirkverbindung steht, dass die weitere Schaltwelle gegen ihre Schaltbewegungen gesperrt ist. Das Sperrsegment weist ebenso einen Bund wie den in den verschiedenen Varianten beschriebenen Schwenkhebel auf. Das Sperrsegmente ist damit auch nach den vorher beschriebenen Varianten zu dem Adapter und zu dem Schaltgetriebe angeordnet, befestigt bzw. gelagert.

Es ist ebenso denkbar an dem Schwenkelement eine Rastkontur auszubilden. Über die Rastkontur fährt dann eine Kugel eines fest zum Schaltgetriebe, beispielsweise fest an der Tragplatte, angeordneten Rastelementes. Die Kugel verrastet in bestimmten Schalt-Schwenkstellungen in Rastausnehmungen in der Rastkontur. Die Schaltwelle ist dadurch in bestimmten Schwenkpositionen relativ zum Schaltgetriebe in dieser Position arretiert.

Sinnvoll ist auch eine Anordnung von einem Schwenkhebel und einem der vorgenannten Sperrsegmente gemeinsam an einer Schaltwelle und an einer Tragplatte. Dazu sind die Bunde des Schwenkhebels und des Sperrelementes konzentrisch zueinander angeordnet und umgreifen die Schaltwelle mit dem Adapter und die in mindestens einem Käfig geführten Wälzkörper. Der Adapter ist wiederum vorzugsweise als Vierkant-Hohlprofil ausgebildet und sitzt wie schon beschrieben auf der Schaltwelle. Entweder umgreift der Schwenkhebel den Bund des Sperrsegmentes oder umgekehrt.

Wenn der Schwenkhebel mit einem Bund den weiteren Bund des Sperrsegmentes umgreift, weist der Bund des Sperrsegmentes den Querschnitt eines Vierkant-Profiles auf. Der Bund ist an seinen vier äußeren Kanten so abgerundet ausgeführt, dass ein zur Schwenkachse der Lagerung zentrierter sowie schwenkbarer Sitz des Bundes in dem Bund des Schwenkhebels abgesichert ist. Die zu dem auf einer Schaltwelle sitzenden Vierkant-Profile gehörenden Innenflächen weisen die ersten Führungsflächen auf, die den zweiten Führungsflächen an dem Adapter gegenüberliegen. Der Bund des Schwenkhebels selbst, von rundem Querschnitt innen und außen, sitzt schwenkbar gelagert zum Getriebe.

Wenn das Sperrsegment mit einem Bund den weiteren Bund des Schwenkhebels umgreift, weist der Bund des Schwenkhebels den Querschnitt eines Vierkant-Profiles auf. Der Bund ist an seinen vier äußeren Kanten so abgerundet ausgeführt, dass ein zur Schwenkachse der Lagerung zentrierter Sitz des Bundes in dem Bund des Sperrhebels abgesichert ist. Die zu dem auf einer Schaltwelle sitzenden Vierkant-Profile gehörenden Innenflächen weisen die ersten Führungsflächen auf, die den zweiten Führungsflächen an dem Adapter gegen-überliegen. Der Bund des Sperrhebels selbst, von rundem Querschnitt innen und außen, sitzt schwenkbar gelagert zum Getriebe.

### Kurze Beschreibung der Zeichnungen

Die Erfindung wird nachfolgend anhand von Ausführungsbeispielen näher erläutert. Es zeigen:
- Figur 1: eine Draufsicht auf eine Schaltvorrichtung mit einem Ausführungsbeispiel einer erfindungsgemäßen Lagerung,
- Figur 2: eine Gesamtansicht der Schaltvorrichtung aus Figur 1 ohne Schaltwelle,
- Figur 3: eine Ansicht der Lagerung zum Übertragen von Drehmomenten aus der Vorrichtung nach Figur 1 im Schnitt entlang der Linie III-III,
- Figur 4: einen Schnitt durch die Lagerung zum Übertragen von Drehmomenten aus der Vorrichtung nach Figur 1 im Schnitt entlang der Linie IV-IV,
- Figur 5: ein weiteres Ausführungsbeispiel einer Vorrichtung mit einem Lager zum Übertragen von Drehmomenten in der Gesamtansicht und
- Figur 6: einen Längsschnitt durch die Lagerung der Vorrichtung nach Figur 5.

### Detaillierte Beschreibung der Zeichnungen

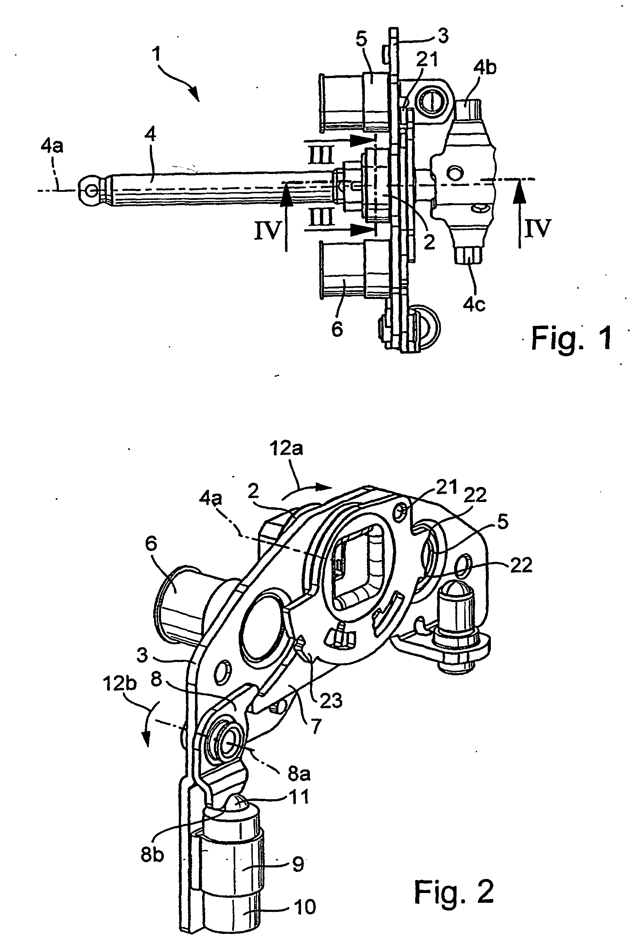

Figur 1 zeigt ein Ausführungsbeispiel einer Schaltvorrichtung 1 mit einer Lagerung 2 zum Übertragen von Drehmomenten. In einer Tragplatte 3 ist eine Schaltwelle 4 längs der Schwenkachse 4a verschiebbar und um die Schwenkachse 4a schwenkbar in der Lagerung 2 gelagert. An der Tragplatte sind weiterhin Lagerstellen 5 und 6 für die Aufnahme weiterer nicht dargestellter Schaltwellen vorgesehen. An der Schaltwelle 4 sind Schaltfinger 4b und 4c befestigt.

In Figur 2 ist die Schaltvorrichtung 1 ohne die Schaltwelle dargestellt. Die Schaltvorrichtung 1 weist einen Schwenkhebel 7 auf. Der Schwenkhebel 7 wirkt für das Erzeugen von einer erhöhten Schaltkraft an der Schaltwelle 4 schwenkbar auf einen Kipphebel 8. Der Kipphebel 8 ist zwischen dem Schwenkhebel 7 und einem Federelement 9 um eine Kippachse 8a kippbar angeordnet. An dem einen Hebelende des Kipphebels 8 liegt das Hebelende des Schwenkhebels 7 an. Gegen das andere Ende des Kipphebels 8 spannt das Federelement 9 vor. Das Federelement 9 ist aus einer in einem Gehäuse 10 aufgenommenen Schraubenfeder und einem Bolzen mit einer Rastkugel 11 gebildet. Der Bolzen und die Feder sind von dem Gehäuse 10 umfasst und somit nicht sichtbar, wobei die Feder den Bolzen mit der Kugel 11 gegen eine Rampe 8b des Kipphebels vorspannt.

Eine mit dem Schwenkhebel 7 in die Schwenkrichtung 12a geschwenkte Schaltwelle 4 aus Figur 1 beaufschlagt mit dem schwenkenden Schwenkhebel 7 den Kipphebel 8. Der Kipphebel 8 kippt dabei in die Kipprichtung 12b und damit gegen das Federelement 9. Die Rampe 8b fährt gegen die Kugel 11, wobei die Kugel 11 in das Gehäuse 10 des Federelementes 9 einfedert.

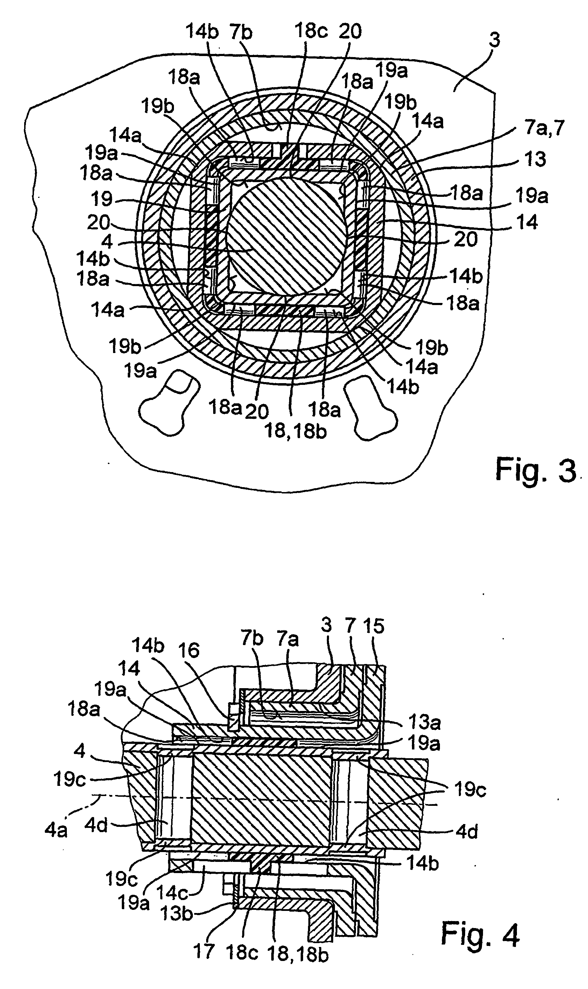

Die Lagerung 2 für die Schaltwelle 4 ist in den Figuren 3 bis 4 vergrößert und geschnitten dargestellt. In einem Bund 13 der Tragplatte 3 mit einem zylindrisch ausgebildeten Loch 13a ist der Schwenkhebel 7 schwenkbar gelagert. Der Schwenkhebel 7 weist dazu einen Bund 7a auf. Der Bund 7a ist hülsenförmig-zylindrisch ausgeführt und von dem Bund 13 umgriffen. Der Bund 7a sitzt mit seiner Außenmantelfläche passgenau in dem Loch 13a. Längs der Schwenkachse 4a ist der Schwenkhebel 7 in die eine Richtung an der Tragplatte 3 festgelegt und in die andere Richtung mittels einer MitnehmerSperrscheibe 15 gehalten.

Die Mitnehmer-Sperrscheibe 15 weist ein Schwenkelement 14 auf. Das Schwenkelement 14 geht in Längsrichtung der Schwenkachse 4a von der Mitnehmersperrscheibe 15 ab und ist in seinem Querschnitt nach Figur 3 betrachtet ein hohles Vierkant-Profil. Die vier Ecken 14a des Vierkantprofiles sind abgerundet und der Kreisbogenform der Innenmantelfläche des Loches 7b angepasst. Das Schwenkelement 14 sitzt mit den vier Ecken 14a zentriert in dem Bund 7a. In der Längsrichtung der Schwenkachse 4a ist die Mitriehmer-Sperrscheibe 15 über das Schwenkelement 14 mittels einer Sicherungsscheibe 16 an dem Bund 13 der Tragplatte 3 gesichert. Die Sicherungsscheibe 16 stützt sich über eine weitere Scheibe 17 an der Stirnseite 13b des Bundes 13 ab.

Die nach innen gewandten Flächen des Vierkantprofiles an dem Schwenkelement 14 sind Führungsflächen 14b für ein Linearlager 18. Das Linearlager 18 weist längs entlang der Schwenkachse 4 abrollbare Wälzkörper 18a in Form von Nadeln auf. An jeder der Führungsflächen 14b stützen sich zwei Reihen der hintereinander in einem Käfig 18b angeordneten Wälzkörper 18a ab. Nach innen liegen die Wälzkörper 18a jeweils an Führungsflächen 19a an. Die Führungsflächen 19a sind an einem Adapter 19 ausgebildet. Die Außenkontur des Adapters 19 umschreibt eine quadratische Säule. Jede der vier Seitenflächen des Prismas weist eine der Führungsflächen 19a auf.

Der Adapter 19 ist in seinem Querschnitt betrachtet ein hohles Vierkantprofil. Der Adapter 19 sitzt auf der Schaltwelle 4. Die nach innen gewandten planen Innenflächen 19b liegen jeweils an einem Abschnitt mit einer Nut 20 an der Schaltwelle 4 an. Die Nut 20 weist einen kreisbogenförmigen dem anliegenden bogenförmigen Abschnitt der Schaltwelle 4 angepassten Querschnitt auf. Die Schaltwelle 4 ist sich in die Nuten 20 schmiegend in dem Adapter 19 mittenzentriert. Außerhalb der Führungsflächen 19a in Längsrichtung der Schwenkachse 4a gesehen ist der Adapter 19 mit Eindrückungen 19c versehen. Diese Eindrückungen 19 sind aus dem Material des Adapters 19 nach innen in ein Loch 4d der Schaltwelle 4 hineingedrückt. Das Loch 4d ist alternativ auch als Ringnut in der Schaltwelle 4 vorgesehen. Mit diesen Eindrückungen 19c ist der Adapter 19 auf der Schaltwelle 4 festgesetzt. Der Weg des Linearlagers 18 in Längsrichtung der Schaltwelle 4 ist über eine in eine Längsnut 14c eingreifende Nase 18c an dem Käfig 18b begrenzt. Der Käfig 18b mit den Wälzkörpern 18a kann sich somit nur über den durch die Länge der Längsnut 14c vorgegebenen axialen Weg bewegen.

Der mit der Schaltwelle 4 geschwenkte Adapter 19 stützt sich über seine Führungsflächen 19a an den Wälzkörpern 18a ab. Die Wälzkörper 18a wiederum stützen sich an den Führungsflächen 14b des Schwenkelementes 14 ab und nehmen das Schwenkelement 14 in Schwenkrichtung 12a der Schaltwelle 4 mit. Die einteilig mit dem Schwenkelement 14 ausgebildete Mitnehmer-Sperrscheibe 15 schwenkt demzufolge auch mit der Schaltwelle 4. Das Schwenkelement 14 ist über seine Ecken 14a relativ zu dem Schwenkhebel 7 in dem Bund 13 zu dem Schwenkhebel 7 schwenkbar gelagert. Erst wenn ein an der Mitnehmer-Sperrscheibe 15 ausgebildeter Mitnehmer 21 (Figuren 1 und 2) den Schwenkhebel 7 an einer der Schwenkrichtung 12a entgegengewandten Körperkante hintergreift, nimmt die Mitnehmer-Sperrscheibe 15 über den Mitnehmer 21 den Schwenkhebel 7 in die Schwenkrichtung 12a mit. Die Schaltwelle 4, der Adapter 19, das Schwenkelement 14 und der Schwenkhebel 7 schwenken relativ zu der bewegungsfesten Tragplatte 3 in dem Bund 13 der Tragplatte. Die Mitnehmer-Sperrscheibe 15 ist mit Sperranschlägen 22 und 23 versehen. Diese Sperranschläge 22 und 23 beaufschlagen zu der Schaltwelle 4 benach-bart in den Lagerstellen 5 und 6 angeordnete und nicht dargestellte Schaltwellen in bestimmten Schaltpositionen und verhindern so unbeabsichtigte und einander entgegenwirkende Schaltbewegungen im Schaltgetriebe.

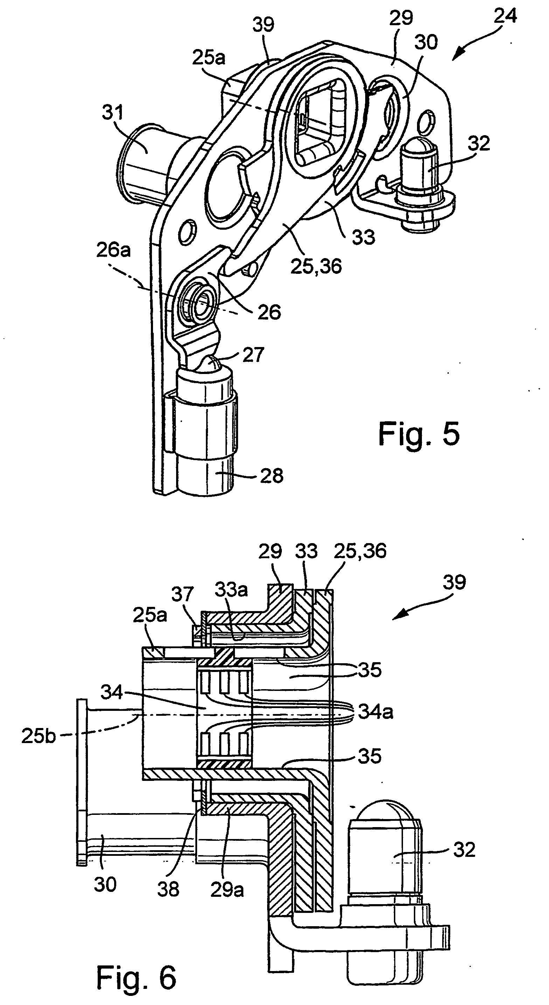

Figuren 5 und 6 zeigen ein weiteres Ausführungsbeispiel der Erfindung, eine Lagerung 39 in einer Schaltvorrichtung 24. Die Schaltvorrichtung 24 ist ohne Schaltwelle dargestellt und weist einen Schwenkhebel 25 auf. Der Schwenkhebei 25 wirkt zum Erzeugen von Schaltkräften auf einen Kipphebel 26 und verkippt diesen um die Kippachse 26a gegen eine Kugel 27 eines Federelementes 28. Der Schwenkhebel 25, der Kipphebel 26 sowie das Federelement 28 sind an einer Tragplatte 29 angeordnet. Außerdem weist die Tragplatte 29 noch Lagerstellen 30 und 31 für weitere nicht dargestellte Schaltwellen sowie eine Arretierung 32 zur Arretierung einer dieser Schaltwellen auf. Zwischen der Tragplatte 29 und dem Schwenkhebel 25 ist eine Mitnehmer-Sperrscheibe 33 angeordnet.

Der Schwenkhebel sitzt in der Lagerung 39 in der Tragplatte 29. An dem Schwenkhebel 25 ist ein Bund 25a ausgebildet, dessen Querschnitt den Querschnitt eines Vierkant-Profiles aufweist. In diesem Bund ist mittels der Wälzkörper 34a eines Rollenkäfigs 34 eine nicht dargestellte Schaltwelle gelagert. Die Innenflächen des Vierkant-Profiles des Bundes 25a sind die ersten Führungsflächen 35 des aus dem Schwenkhebel 25 und dem Bund 25a gebildeten Schwenkelementes 36. Das Schwenkelement 36 ist schwenkbar in einem Bund 33a gelagert. Der Bund 33a ist einteilig mit der Mitnehmer-Sperrscheibe 33 ausgebildet und weist ein zylindrisches Querschnittsprofil auf. Mit seiner Außenmantelfläche sitzt der Bund 33a in einem Bund 29a der Tragplatte. In dem Bund 29a ist der-Bund 33a schwenkbar aber axial fest, d. h. entlang der Schwenkachse 25b, fest aufgenommen und gelagert. Dabei sitzt der Bund 33a zwischen dem Schwenkhebel 25 und der Tragplatte 29, wobei der Schwenkhebel 25 über dem Bund 25a mit einem Sicherungsring 37 längs der Schwenkachse 25b gegen den Bund 29a der Tragplatte 29 festgestellt ist. Der Siche-rungsring 37 stützt sich dabei über eine Scheibe 38 an dem Bund 29a ab. In dem Bund 25a sitzt üblicherweise eine mit einem Adapter versehene Schaltwelle. Die Schaltwelle ist entlang der Schwenkachse 25b verschiebbar zu dem Schwenkhebel 25 angeordnet, nimmt den Schwenkhebel 25 aber in Schwenkrichtung mit.

### Bezugszeichen

- 1: Schaltvorrichtung
- 2: Lagerung
- 3: Tragplatte
- 4: Schaltwelle
- 4a: Schwenkachse
- 4b: Schaltfinger
- 4c: Schaltfinger
- 4d: Loch
- 5: Lagerstelle
- 6: Lagerstelle
- 7: Schwenkhebel
- 7a: Bund
- 7b: Loch
- 8: Kipphebel
- 8a: Kippachse
- 8b: Rampe
- 9: Federelement
- 10: Gehäuse
- 11: Kugel
- 12a: Schwenkrichtung
- 12b: Kipprichtung
- 13: Bund
- 13a: Loch
- 13b: Stirnseite
- 14: Schwenkelement
- 14a: Ecke
- 14b: Führungsfläche
- 14c: Längsnut
- 15: Mitnehmer-Sperrscheibe
- 16: Sicherungsscheibe
- 17: Scheibe
- 18: Linearlager
- 18a: Wälzkörper
- 18b: Käfig
- 18c: Nase
- 19: Adapter
- 19a: Führungsfläche
- 19b: Innenfläche
- 19c: Eindrücküng
- 20: Nut
- 21: Mitnehmer
- 22: Sperranschlag
- 23: Sperranschlag
- 24: Schaltvorrichtung
- 25: Schwenkhebel
- 25a: Bund
- 25b: Schwenkachse
- 26: Kipphebel
- 26a: Kippachse
- 27: Kugel
- 28: Federelement
- 29: Tragplatte
- 29a: Bund
- 30: Lagerstelle
- 31: Lagerstelle
- 32: Arretierung
- 33: Mitnehmer-Sperrscheibe
- 33a: Bund
- 34: Rollenkäfig
- 34a: Wälzkörper
- 35: Führungsfläche
- 36: Schwenkelement
- 37: Sicherungsring
- 38: Scheibe
- 39: Lagerung

## Patentansprüche

1. Schalteinrichtung für ein Schaltgetriebe, enthaltend
- ein Schwenkelement (14), das zum Schaltgetriebe relativ fest ist und eine erste Führungsfläche (14b) aufweist,
- einen Adapter (19), der eine zweite Führungsfläche (19a) aufweist und der längs zum Schwenkelement relativ bewegbar und mit diesem schwenkbar angeordnet ist,
- wobei die Führungsflächen zueinander beabstandet sind und zwischen sich rollenförmige Wälzkörper (18a) aufnehmen, so daß zwischen dem Schwenkelement und dem Adapter zum einen eine Linearbewegung ausführbar ist und zum anderen zum anderen Drehmomente übertragbar sind, und
- wobei der Adapter längs und in Schwenkrichtung fest auf einer Schaltwelle (4) mit kreisrunder Aussenkontur sitzt.

2. Schalteinrichtung nach Anspruch 1, **dadurch gekennzeichnet, dass** die Außenkontur des Adapters (19a) ein gerades Prisma beschreibt, wobei wenigstens an einer der Seitenflächen des Prismas die zweite Führungsfläche (19a) ausgebildet ist.

3. Schalteinrichtung nach Anspruch 2, **dadurch gekennzeichnet, dass** der Adap-ter (19a) in seinem Querschnitt betrachtet ein hohles Vierkant-Profil ist, an dessen nach innen gewandten Innenfläche (19b) die Schaltwelle (4) zumindest abschnittsweise anliegt.

4. Schalteinrichtung nach Anspruch 3, **dadurch gekennzeichnet, dass** die Schaltwelle (4) sich zumindest abschnittsweise in wenigstens eine längs verlaufende Nut (20) an einer der Innenflächen (19b) des Adapters (19) einschmiegt, wobei die Nut (20) mit einem kreisbogenförmigen sowie dem anliegenden bogenförmigen Abschnitt der Schaltwelle (4) angepassten Querschnitt versehen ist.

5. Schalteinrichtung nach Anspruch 2, **dadurch gekennzeichnet, dass** jede der vier Seitenflächen des Prismas jeweils eine zweite Führungsfläche (19a) aufweist und dass pro Seitenfläche zwischen der ersten Führungsfläche (14b, 35) und der zweiten Führungsfläche (19a) mehrere der Wälzkörper (18a, 34a) längs in einem Käfig (18b, 34) hintereinander angeordnet sind.

6. Schalteinrichtung nach Anspruch 2, **dadurch gekennzeichnet, dass** an jeder der vier Seitenflächen des Prismas jeweils eine zweite Führungsfläche (19a) ausgebildet ist und dass pro Seitenfläche zwischen der planen ersten Führungsfläche (14a, 35) und der zweiten Führungsfläche (19a) mehrere der Wälzkörper (18a, 34a) längs hintereinander angeordnet sind, wobei alle der Wälzkörper (18a, 34a) in einem die Schaltwelle (4) umgreifenden Käfig (18b, 34) geführt sind.

7. Schalteinrichtung nach Anspruch 2, **dadurch gekennzeichnet, dass** die Außenkontur des Adapters (19) eine quadratische Säule umschreibt, wobei ein jeder der vier Seitenflächen des Prismas jeweils eine zweite Führungsfläche (19a) ausgebildet ist.

8. Schalteinrichtung nach Anspruch 1, **dadurch gekennzeichnet, dass** das Schwenkelement (36) zumindest ein Schwenkhebel (25) ist, wobei der Schwenkhebel (25) schwenkbar und längs fest in der Lagerung (39) gelagert ist.

9. Schalteinrichtung nach Anspruch 1, **dadurch gekennzeichnet, dass** der Schwenkhebel (25) den Adapter (19) mit der Schaltwelle (4) umgreift und konzentrisch zu der Längsmittelachse der Schaltwelle (4) angeordnet ist.

10. Schalteinrichtung nach Anspruch 2, **dadurch gekennzeichnet, dass** der Schwenkhebel (25) Bestandteil einer Schaltvorrichtung (24) für das Erzeugen von Schaltkräften an der Schaltwelle (4) ist, wobei der Schwenkhebel (25) für das Erzeugen der Schaltkräfte durch die Schaltwelle (4) schwenkbar auf ein dabei elastisch einfederndes Federelement (28) einwirkt und dass zumindest beim Erzeugen der Schaltkräfte zwischen dem Schwenkhebel (25) und dem Federelement (28) ein Kipphe-bel (26) angeordnet ist, wobei der geschwenkte Schwenkhebel (25) zu einer Kippachse (26a) des Kipphebels (26) beabstandet an dem Kipphebel (26) angreift und gleichzeitig das Federelement (28) entgegen dem dabei um die Kippachse (26a) schwenkenden Kipphebel (26) gegen den Kipphebels (26) vorgespannt ist.

11. Schalteinrichtung nach Anspruch 10, **dadurch gekennzeichnet, dass**
- der Schwenkhebel (7, 25) und der Kipphebel (8, 26) an einer zum Schaltgetriebe festen Tragplatte (3, 29) schwenkbar aufgenommen sind,
- der Adapter (19) in seinem Querschnitt betrachtet ein hohles Vierkant-Profil ist, an dessen nach innen gewandten planen Innenflächen die Schaltwelle (4) zumindest abschnittsweise anliegt und jede der vier Seitenflächen des Prismas jeweils eine jeweils einer ersten Führungsfläche (14b, 35) gegenüberliegende zweite Führungsfläche (19a) bildet, wobei pro Seitenfläche zwischen der ersten Führungsfläche (14b, 35) und der zweiten Führungsfläche (19a) mehrere der Wälzkörper (18a, 34a) längs in einem Käfig (18b, 34) hintereinander angeordnet sind,
- an dem Kipphebel (8, 26) der Schwenkhebel (7, 25) und das Federelement (9, 28) zumindest beim Erzeugen der Schaltkraft anliegt und dass das Federelement (9, 28) eine in Schaltgetrieben üblicherweise eingesetzte Arretierung mit einer in einer kalottenförmig ausgebildeten Aufnahme eines Bolzens gelagerten Kugel (11, 27) ist, wobei der Bolzen entlang der Rotationsachse einer Schraubenfeder beweglich in einem zur Tragplatte (3, 29) festen Gehäuse (10) aufgenommen sowie durch die Schraubenfeder in Richtung des Kipphebels (8, 26) vorgespannt ist.

12. Schalteinrichtung nach Anspruch 1, **dadurch gekennzeichnet, dass** das Schwenkelement (14) ein schwenkbares und längs in der Lagerung (2) gelagertes Sperrsegment (15) einer Schaltvorrichtung (1) ist, wobei das schwenkbare Sperrsegment (15) zeitweise mit wenigstens einer weiteren in der Schaltvorrichtung (1) zu der Schaltwelle (4) benachbart ange-ordneten Schaltwelle derart in Wirkverbindung steht, dass die weitere Schaltwelle gegen ihre Schaltbewegungen gesperrt ist.

13. Schalteinrichtung nach Anspruch 1, **dadurch gekennzeichnet, dass** der Adapter (19) ein hülsenförmiges Bauteil aus Blech mit mindestens zwei planen zweiten Führungsflächen (19a) ist und dass der Adapter (19) zumindest längs mittels wenigstens eines aus dem Blech radial nach innen gebildeten sowie in eine Ausnehmung (4d) an der Schaltwelle (4) eingreifenden Formelementes (19c) auf der Schaltwelle (4) gesichert ist.

## Claims

1. Gearshift device for a manual transmission comprising
- a pivoting element (14) that is fixed relative to the manual transmission and comprises a first guide surface (14b),
- an adaptor (19) that comprises a second guide surface (19a) and is arranged for longitudinal displacement relative to the pivoting element (14) and for pivoting therewith,
- wherein the guide surfaces are spaced from each other and receive between each other, roller-shaped rolling elements (18a), so that, on the one hand, a linear movement is possible between the pivoting element and the adaptor, and, on the other hand, torques can be transmitted, and
- wherein the adaptor is seated fixed in longitudinal and in pivoting direction on a gearshift shaft (4) having a circular outer contour.

2. Gearshift device according to claim 1, **characterised in that** the outer contour of the adaptor (19) describes a straight-side prism, the second guide surface (19a) being configured on at least one of the side surfaces of the prism.

3. Gearshift device according to claim 2, **characterised in that** the adaptor (19a) as viewed in cross-section, is a hollow square profile on whose inwards oriented inner surface (19b) the gearshift shaft (4) bears at least section-wise.

4. Gearshift device according to claim 3, **characterised in that** the gearshift shaft (4) fits snugly at least section-wise into at least one longitudinally extending groove (20) on one of the inner surfaces (19b) of the adaptor (19), the groove (20) having a circular arc-shaped cross-section matched to the fitted arc-shaped section of the gearshift shaft (4).

5. Gearshift device according to claim 2, **characterised in that** each of the four side surfaces of the prism comprises a second guide surface (19a), and per side surface, several rolling elements (18a, 34a) are arranged behind one another in longitudinal direction in a cage (18b, 34) between the first guide surface (14b, 35) and the second guide surface (19a).

6. Gearshift device according to claim 2, **characterised in that** a second guide surface (19a) is configured on each of the four side surfaces of the prism, and per side surface, several rolling elements (18a, 34a) are arranged behind one another in longitudinal direction between the flat first guide surface (14b, 35) and the second guide surface (19a), all the rolling elements (18a, 34a) being guided in a cage (18b, 34) surrounding the gearshift shaft (4).

7. Gearshift device according to claim 2, **characterised in that** the outer contour of the adaptor (19) circumscribes a square column, a second guide surface (19a) being configured on each of the four side surfaces of the prism.

8. Gearshift device according to claim 1, **characterised in that** the pivoting element (36) is at least one pivoting lever (25) which is mounted for pivoting in the mounting arrangement (39) while being fixed in the longitudinal direction.

9. Gearshift device according to claim 1, **characterised in that** the pivoting lever (25) surrounds the adaptor (19) with the gearshift shaft (4) while being arranged concentric with the central longitudinal axis of the gearshift shaft (4).

10. Gearshift device according to claim 2, **characterised in that** the pivoting lever (25) is a part of a gearshift device (24) for producing shifting forces on the gearshift shaft (4), for producing the shifting forces, the pivoting lever (25), that can be pivoted by the gearshift shaft (4), acts on an elastically yielding spring element (28), and at least during the production of the shifting forces, a tilting lever (26) is arranged between the pivoting lever (25) and the spring element (28), the pivoted pivoting lever (25) acts on the tilting lever (26) at a distance from an axis of tilt (26a) of the tilting lever (26), and the spring element (28) is biased at the same time against the tilting lever (26), in opposition to the tilting lever (26), while this is pivoting about the axis of tilt (26a).

11. Gearshift device according to claim 10, **characterised in that**
- the pivoting lever (7, 25) and the tilting lever (8, 26) are received for pivoting on a carrier plate (3, 29) fixed to the manual transmission,
- as viewed in cross-section, the adaptor (19) is a hollow square profile on whose inwards oriented flat inner surfaces, the gearshift shaft (4) bears at least section-wise, and each of the four side surfaces of the prism forms a second guide surface (19a) situated opposite a first guide surface (14b, 35), per side surface, several rolling elements (18a, 34a) are arranged behind one another in longitudinal direction in a cage (18b, 34) between the first guide surface (14b, 35) and the second guide surface (19a),
- the pivoting lever (7, 25) and the spring element (9, 28) bear against the tilting lever (8, 26) at least during the production of the gearshift force, and
- the spring element (9, 28) is a detent of a type commonly used in manual transmissions comprising a ball (11, 27) mounted in a concave reception configured in a pin, said pin being received for displacement along an axis of rotation of a coiled spring in a housing (10) fixed on the carrier plate (3, 29), and said pin being biased by the coiled spring towards the tilting lever (8, 26).

12. Gearshift device according to claim 1, **characterised in that** the pivoting element (14) is a pivotal locking segment (15) of a gearshift device (1) and is longitudinally mounted in the mounting arrangement (2) while being operatively connected temporarily to at least one further gearshift shaft adjacent to the gearshift shaft (4) in the gearshift device (1), so that the further gearshift shaft is locked against its shifting movements.

13. Gearshift device according to claim 1, **characterised in that** the adaptor (19) is a sleeve-shaped component of sheet metal comprising at least two flat second guide surfaces (19a), and said adaptor (19) is secured on the gearshift shaft (4) at least in longitudinal direction by at least one shaped element (19c) that is formed radially inwards out of the sheet metal and engages into a recess (4d) on the gearshift shaft (4).

## Revendications

1. Dispositif de changement de vitesse pour une transmission manuelle comprenant
- un élément de pivotement (14) qui est fixé par rapport à la transmission manuelle et comprend une première surface de guidage (14b),
- un adaptateur (19) qui comprend une seconde surface de guidage (19a) et qui est agencé en déplacement longitudinal par rapport à l'élément de pivotement et qui peut pivoter avec celui-ci,
- lesdites surfaces de guidage étant écartées, l'une de l'autre, et recevant entre elles, des corps roulants (18a) en forme de rouleaux, de sorte que, d'une part, un mouvement linéaire est possible entre l'élément de pivotement et l'adaptateur, et, d'autre part, des moments de torsion peuvent être transmis, et
- ledit adaptateur est assiégé fixe en direction longitudinale et en direction de pivotement sur un arbre de changement de vitesse (4) ayant un contour extérieur circulaire.

2. Dispositif de changement de vitesse selon la revendication 1, **caractérisé en ce que** le contour extérieur de l'adaptateur (19) décrit un prisme droit, la seconde surface de guidage (19a) étant configurée au moins sur l'une des surfaces latérales du prisme.

3. Dispositif de changement de vitesse selon la revendication 2, **caractérisé en ce que**, vu en section droite, l'adaptateur (19) est un profilé carré creux, contre la surface intérieure (19b) duquel orientée vers l'intérieur, s'appuie l'arbre de changement de vitesse (4), au moins par sections.

4. Dispositif de changement de vitesse selon la revendication 3, **caractérisé en ce que** l'arbre de changement de vitesse (4) se blottit, au moins par sections, dans au moins une rainure longitudinale (20) sur l'une des surfaces intérieures (19b) de l'adaptateur (19), ladite rainure (20) ayant une section droite en forme d'arc circulaire qui est adaptée à la forme d'arc de la section de l'arbre de changement de vitesse (4) qui s'appuie contre elle.

5. Dispositif de changement de vitesse selon la revendication 2, **caractérisé en ce que** chacune des quatre surfaces latérales du prisme comprend une seconde surface de guidage (19a), et **en ce que**, pour chaque surface latérale, plusieurs corps roulants (18a, 34a) sont agencés l'un derrière l'autre en direction longitudinale dans une cage (18b, 34) disposée entre la première surface de guidage (14b, 35) et la seconde surface de guidage (19a).

6. Dispositif de changement de vitesse selon la revendication 2, **caractérisé en ce que**, une seconde surface de guidage (19a) est agencée sur chacune des quatre surfaces latérales du prisme, et **en ce que**, pour chaque surface latérale, plusieurs corps roulants (18a, 34a) sont agencés l'un derrière l'autre en direction longitudinale entre la première surface plane de guidage (14b, 35) et la seconde surface de guidage (19a), tous lesdits corps roulants (18a, 34a) étant guidés dans une cage (18b, 34) qui entoure l'arbre de changement de vitesse (4).

7. Dispositif de changement de vitesse selon la revendication 2, **caractérisé en ce que** le contour extérieur de l'adaptateur (19) circonscrit une colonne carrée, et une seconde surface de guidage (19a) est configurée sur chacune des quatre surfaces latérales du prisme.

8. Dispositif de changement de vitesse selon la revendication 1, **caractérisé en ce que** l'élément de pivotement (36) est au moins un levier pivotant (25) qui est monté dans le montage (39) pour pivoter en étant immobilisé en direction longitudinale.

9. Dispositif de changement de vitesse selon la revendication 1, **caractérisé en ce que** le levier pivotant (25) entoure l'adaptateur (19) et l'arbre de changement de vitesse (4) en étant agencé concentriquement à l'axe longitudinale centrale de l'arbre de changement de vitesse (4).

10. Dispositif de changement de vitesse selon la revendication 2, **caractérisé en ce que** le levier pivotant (25) forme partie d'un dispositif de changement de vitesse (24) pour produire des forces de changement de vitesse sur l'arbre de changement de vitesse (4), et ce levier pivotant (25), qui peut être pivoté par l'arbre de changement de vitesse (4), agit, pour produire les forces de changement de vitesse, sur un élément ressort (28) qui fléchit élastiquement, et, au moins pendant la production des forces de changement de vitesse, un levier basculant (26) est agencé entre le levier pivotant (25) et l'élément ressort (28), en position de pivotement, le levier pivotant (25) est appliqué au levier basculant (26) à distance d'un axe de basculement (26a) du levier basculant (26), l'élément ressort (28) étant en même temps précontraint contre le levier basculant (26), à l'encontre du levier basculant (26), pendant que celui-ci pivote autour de l'axe de basculement (26a).

11. Dispositif de changement de vitesse selon la revendication 10, **caractérisé en ce que**
- le levier pivotant (7, 25) et le levier basculant (8, 26) sont reçus en pivotement sur une plaque de support (3, 29) qui est fixée à la transmission manuelle,
- vu en section droite, l'adaptateur (19) est un profilé carré creux, et contre ses surfaces planes intérieures orientées vers l'intérieur, s'appuie l'arbre de changement de vitesse (4), au moins par sections, chacune des quatre surfaces latérales du prisme forme une seconde surface de guidage (19a) opposé à l'une des premières surfaces de guidage (14b, 35) et **en ce que**, pour chaque surface latérale, plusieurs corps roulants (18a, 34a) sont agencés l'un derrière l'autre en direction longitudinale dans une cage (18b, 34) disposée entre la première surface de guidage (14b, 35) et la seconde surface de guidage (19a),
- le levier pivotant (7, 25) et l'élément ressort (9, 28) s'appuient contre le levier basculant (8, 26) au moins pendant la production de la force de changement de vitesse, et
- l'élément ressort (9, 28) est une détente du type usuellement utilisé dans des transmissions manuelles et ayant une bille (11, 27) montée dans une réception concave d'un boulon, ce boulon étant reçu pour déplacement le long d'un axe de rotation d'un ressort à boudin dans un boîtier (10) qui est fixé à la plaque de support (3, 29), et ce boulon étant précontraint par le ressort à boudin vers le levier basculant (8, 26).

12. Dispositif de changement de vitesse selon la revendication 1, **caractérisé en ce que** l'élément de pivotement (14) est un segment pivotant de blocage (15) d'un dispositif de changement de vitesse (1) et est monté longitudinalement dans le montage (2) en étant temporairement en engagement de fonctionnement avec au moins un autre arbre de changement de vitesse qui est adjacent à l'arbre de changement de vitesse (4) dans le dispositif de changement de vitesse (1), de sorte que l'autre arbre de changement de vitesse est bloqué contre ses mouvements de changement de vitesse.

13. Dispositif de changement de vitesse selon la revendication 1, **caractérisé en ce que** l'adaptateur (19) est un composant en forme de douille en tôle ayant au moins deux secondes surfaces planes de guidage (19a), et l'adaptateur (19) est fixé sur l'arbre de changement de vitesse (4), au moins dans la direction longitudinale, par au moins un élément (19c) qui est formé radialement vers l'intérieur à partir de la tôle et qui s'engage dans un évidement (4d) sur l'arbre de changement de vitesse (4).
